## Europäisches Patentamt

## European Patent Office

## Office européen des brevets

(19)

(11) Veröffentlichungsnummer : **0 129 538**
**B1**

(12)

# EUROPÄISCHE PATENTSCHRIFT

(45) Veröffentlichungstag der Patentschrift :
02.11.89

(21) Anmeldenummer : 84890112.0

(22) Anmeldetag : 15.06.84

(51) Int. Cl.⁴ : **C 03 B    3/00,** C 03 B    5/027,
C 03 B    5/187,
C 03 B    5/225, C 03 B    5/235

(54) Verfahren zum Erzeugen von Glas für die Herstellung von Glasprodukten sowie Vorrichtung zur Durchführung dieses Verfahrens.

(30) Priorität : 21.06.83 AT 2275/83
14.12.83 AT 4342/83

(43) Veröffentlichungstag der Anmeldung :
27.12.84 Patentblatt 84/52

(45) Bekanntmachung des Hinweises auf die Patenterteilung : 02.11.89 Patentblatt 89/44

(84) Benannte Vertragsstaaten :
AT BE CH DE FR GB IT LI SE

(56) Entgegenhaltungen :
CH-A- 204 189
GB-A- 1 229 433
US-A- 1 759 228
US-A- 1 953 034
US-A- 3 508 742

(73) Patentinhaber : Harcuba, Siegfried
Höhenstrasse 96
A-6020 Innsbruck (AT)

Harcuba, Theodor Peter, Dr.
Wittikonerstrasse 59
CH-8020 Zürich (CH)

Interverre Anstalt
Altenbach 99
Vaduz (LI)

(72) Erfinder : Harcuba, Siegfried
Höhenstrasse 96
A-6020 Innsbruck (AT)

(74) Vertreter : Atzwanger, Richard Dipl.Ing.
Patentanwälte Dipl.-Ing. Anton Atzwanger, Dipl.-Ing.
Richard Atzwanger Mariahilfer Strasse 1c
A-1060 Wien (AT)

EP 0 129 538 B1

Jouve, 18, rue St-Denis, 75001 Paris, France

**Beschreibung**

Die Erfindung betrifft ein Verfahren zum Erzeugen von Glas zur Herstellung von Glasprodukten durch Einbringen von vorgewärmten Rohstoffkomponenten und von Glasbruch bzw. Fritte in einen Glasofen, Schmelzen der Ausgangsmaterialien unter Zufuhr von Wärmeenergie und unter Beifügung von Läuterstoffen sowie anschließende Durchführung der Rauhschmelze und der Feinschmelze Die Erfindung betrifft weiters eine Vorrichtung zur Durchführung dieses Verfahrens.

Gemäß dem bekannten Stand der Technik werden die Rohstoffkomponenten für die Erzeugung von Glas und Läuterstoffe in den für die gewünschte Glasart erforderlichen Anteilen miteinander vermischt und in eine Schmelzwanne eingebracht, in der sie durch Zufuhr von Wärme, insbesondere durch oberhald der Schmelzwanne angeordnete Brenner, aufgeschmolzen werden und in der weiters die erforderliche Entgasung der Schmelze, die sogenannte Läuterung, erfolgt.

Um den für den Schmelzvorgang erforderlichen Energieaufwand herabzusetzen, ist es bekannt, die Mischung der Rohstoffkomponenten in vorgewärmtem bzw. erhitztem Zustand in die Schmelzwanne einzubringen. Da Schmelzwannen eine Tiefe von 0,9 m bis 1,4 m aufweisen, wird dessen ungeachtet durch die vollständige Aufschmelzung der Rohstoffkomponenten ein sehr hoher Energieaufwand bedingt. Weiters treten in der Schmelzwanne sehr unterschiedliche Temperaturverhältnisse auf. So weist die Schmelze in den Bereichen der Wände der Schmelzwanne eine geringere Temperatur auf als im mittleren Bereich der Schmelzwanne. Da insbesondere hierdurch Schwierigkeiten in der Homogenisierung der Schmelze bedingt werden, erfordert es einen besonderen technologischen und zeitlichen Aufwand, nicht nur die an der Oberfläche liegenden Schichten der Schmelze sondern auch die darunter liegenden, insbesondere die nahe dem Boden der Schmelzwanne liegenden Schichten vollständig zu entgasen. Dies liegt darin begründet, daß den in den im unteren Beckenbereich befindlichen Schmelzmassen enthaltenen Glasblasen nicht die erforderliche kinetische Energie zur Verfügung steht, um an die Oberfläche zu gelangen. Um die Aufschmelzung der Rohstoffkomponenten und die Läuterung der Schmelze zu erzielen, ist aus diesem Grunde eine relativ lange Verweildauer der Schmelze in der Schmelzwanne erforderlich.

Die bekannter Herstellungsverfahren sind auch deshalb nachteilig, weil durch die Mischung aller Rohstoffkomponenten in einem Mischer mit je Mischcharge richtigen Anteilen der Komponenten beim Entleeren des Mischers die dem Glassatz entsprechende Feinverteilung nicht gewährleistet ist. Da Entmischungen Auftreten können, kommt diese auch nicht beim anschließenden Transport in einen Vorratsbehälter zum Anspeisen der Schmelzwanne zustande. Deshalb kann die Rohstoffverteilung auch dann heterogen sein, wenn die Mischung der Rohstoffkomponenten in dünnen Schichten in eine Schmelzwanne eingelegt wird. Dadurch sinken die Einlageschichten je nach den thermischen Gradienten in verschiedene Tiefen ab. Verschieden viskose Massen behindern sich gegenseitig und verursachen Konvektionsströmungen, die nach langen Umwälzungen der Schichten zwar zu deren allmählicher Aufschmelzung jedoch wenig zu der erforderlichen Homogenisierung, um die geforderte Glasqualität zu erzielen, beitragen. Die bekannten Gleichgewichtsreaktionen zwischen den Rohstoffkomponenten laufen daher, weil sie nicht gesteuert werden können, sehr langsam ab.

Durch die großvolumige Ausbildung herkömmlicher Schmelzwannen, weiters durch Regeneratoren, Unterflurkanäle, Umsteuereinrichtungen und Rekuperatoren entsprechender Abmessungen, die auf statisch berechneten Tragkonstruktionen angeordnet sind, werden die Schmelzwannen einerseits äußerst kostspielig und müssen sie andererseits zufolge ihres hohen Gewichtes und der erwähnten Ausbildung ortsfest ausgebildet werden. Da zudem jede Erzeugung von anderen Glasprodukten eine weitere gleiche oder ähnliche Glaswanne erfordert, werden vielfach Überkapazitäten verursacht.

Weiters bedingt die Außerbetriebnahme von Schmelzöfen Schäden und verursacht die Inbetriebhaltung hohe Energiekosten. Bei überwiegend fossil beheizten Glasöfen steigt aufgrund der Gewölbungen infolge der hohen Abstrahlungsverluste und aufgrund des Erfordernisses einer höheren Wärmezufuhr in die Schmelzmasse der erforderliche Energieaufwand stark an. Dieser besteht auch dann, wenn eine Gemengevorwärmung und kostspielige Isolierungen vorgenommen werden.

Aus der DE-C-25 18 635 ist es bekannt, die Rohstoffkomponenten in dünnen Schichten auf die in einem Schmelzofen befindliche Glasschmelze aufzubringen. Aufgrund des großen Volumens der Schmelzwanne treten jedoch auch dabei große Temperaturgradienten auf, welche Konvektionsströmungen hervorrufen, mit denen die Einlagen nicht steuerbare Wanderungen durchführen, weswegen die der Verarbeitung zugeführte Schmelze fehlerhaft ist. Aufgrund der sehr langen Verweilzeit im Ofen können Leistungssteigerungen nur durch eine Vergrößerung der Anlage erzielt werden.

Der Erfindung liegt demnach die Aufgabe zugrunde, ein Verfahren zum Erzeugen von Glas für die Herstellung von Glasprodukten sowie eine Vorrichtung zur Durchführung dieses Verfahrens zu schaffen, durch welche die dem bekannten Stand der Technik anhaftenden Nachteile vermieden werden, da unter Herabsetzung des Energiebedarfes die Glasbildung, Läuterung und Homogenisierung rascher und leichter steuerbar erfolgt, als dies bisher möglich war und trotzdem eine Glasmasse mit hoher Qualität erzeugt werden kann. Dies wird erfindungsgemäß dadurch erzielt, daß bei dem eingangs genannten Verfahren die Rohstoffkomponenten auf die Oberfläche eines längs einer gegebenenfalls geringfügig geneigten Bahn geführten, aus dem Glasbruch oder der Fritte erzeugten Glasschmelzflusses in einem Mengenverhältnis von einem Teil Glasschmelzfluß und einem Teil bis neun Teilen Rohstoffkomponenten aufgebracht und auf diesem bzw. in diesem unter Zufuhr der Wärmeenergie aufgeschmolzen werden, wobei die hierdurch gebildete Glasschmelze abgezogen wird und daß nach Einbringung der Läuterstoffe im letzten Abschnitt der Bahn die Läuterung der Glasschmelze erfolgt.

Vorzugsweise werden die Rohstoffkomponenten bis auf einen Wert etwas unterhalb der Sintertemperatur einer eutektischen Schmelze aufgewärmt auf den Glasschmelzfluß aufgebracht, wobei sie Temperaturen von vorzugsweise 350 °C bis etwa 450 °C aufweisen. Es kann dabei vorteilhaft sein, die auf den Glasschmelzfluß aufgebrachten Rohstoffkomponenten mit diesem mechanisch zu vermischen. Zweckmäßigerweise wird der Glasschmelzfluß mit den auf diesem aufzuschmelzenden bzw. aufgeschmolzenen Rohstoffkomponenten mit einer Geschwindigkeit von 5 cm bis 10 cm/min abgezogen.

Die einzelnen Rohstoffkomponenten können miteinander zumindest teilweise vorgemischt auf den Glasschmelzfluß aufgebracht werden oder sie können entsprechend ihren chemophysikalischen Reaktionen gesondert voneinander zeitlich und örtlich nacheinander auf den Glasschmelzfluß aufgebracht werden.

Die Zufuhr von Wärme in den Glasschmelzfluß kann mittels in diesen einragender Elektroden erzeugter Ohmscher Wärme erfolgen. Weiters kann die Zufuhr von Wärme zum Glasschmelzfluß bzw. zur Glasschmelze in an sich bekannter Weise mittels die Oberfläche des Glasschmelzflusses bzw. der Glasschmelze beheizender Brenner oder elektrischer Heizeinrichtungen erfolgen. Schließlich kann dem Glasschmelzfluß bzw. der Glasschmelze auch von unten her durch Wärmeleitung der die Bahn bildenden Platten zufolge Erhitzen ihrer abgewandten Oberfläche Wärmeenergie zugeführt werden.

Eine Vorrichtung zur Durchführung des erfindungsgemäßen Verfahrens weist einen Schmelzofen, Einrichtungen für die Zufuhr von Wärme, eine Einrichtung zur Vorwärmung der Rohstoffkomponenten und eine Einrichtung zum Einbringen von Glasbruch bzw. Glasfritte, von Rohstoffkomponenten und von Läuterstoffen in den Schmelzofen auf, wobei erfindungsgemäß der Schmelzofen eine allenfalls gegenüber der Horizontalen geringfügig geneigte Bahn enthält, vor deren oberem Ende eine Einrichtung zur Erzeugung eines Glasschmelzflusses aus dem Glasbruch bzw. aus der Fritte angeordnet ist, die Einrichtungen zum Einbringen von der Glaserzeugung dienenden Rohstoffkomponenten so angebracht sind, daß sie diese Rohstoffkomponenten auf den Glasfluß aufbringen, gegebenenfalls Mischeinrichtungen vorgesehen sind und weiters Abzugseinrichtungen, insbesondere feuerfeste Walzen, vorgesehen sind, wobei die Einrichtung zum Einbringen der Läuterstoffe vor dem letzten Abschnitt der Bahn, wo die Läuterung erfolgt, angeordnet ist.

Die Einrichtung zur Erzeugung des Glasschmelzflusses aus Glasbruch bzw. aus Fritte kann dabei durch eine vor dem oberen Ende der Bahn angeordnete, vorzugsweise unterteilte Kammer, die mit Heizeinrichtungen ausgestattet ist, gebildet sein. Die Einrichtungen für das Aufbringen der Rohstoffkomponenten auf den Glasschmelzfluß können durch Dosiereinrichtungen und gegebenenfalls diesen nachgeschaltete Rütteleinrichtungen zum Vermischen der Rohrstoffkomponenten gebildet sein. Die Einrichtungen zur Zufuhr von Wärme können durch längs der Bahn angeordnete Elektroden und bzw. oder durch Brenner bzw. durch elektrische Heizeinrichtungen gebildet sein.

Nach weiters bevorzugten Merkmalen sind im Verlauf der Bahn Schikanen, insbesondere Schwellen, insbesondere zur Erleichterung des Austretens von Dissoziationsgasen vorgesehen. Weiters können im ersten Abschnitt der Bahn die Decke durchsetzende höhenverstellbare, feuerfeste Rührer angeordnet sein, welche die flüssigen und die festen Schichten zumindest teilweise vermischen und bzw. oder Strömungen hervorrufen. In weiteren Abschnitten der Bahn können die Seitenwände durchsetzende Rührer vorgesehen sein, die in den Schmelzfluß einragen und Strömungen bewirken, durch welche Grenzschichten aufgelöst und thermisch abgebaut werden sowie die Entgasung gefördert wird.

Besonders zweckmäßig ist es, wenn die Vorrichtung als Einheit höhenverstellbar und bzw. oder um eine vertikale Achse verschwenkbar gelagert ist, da hierdurch mit einer einzigen Vorrichtung unterschiedliche Glaserzeugungsanlagen angespeist werden können.

Die Vorwärmeeinrichtung kann durch eine um eine geneigte Achse verdrehbare und beheizbare Trommel gebildet sein, an deren oberer Stirnfläche die gemischten Rohstoffkomponenten zugeführt werden, in welcher sie erhitzt werden und von der sie durch die untere Stirnfläche hindurch über eine Rüttelvorrichtung mindestens einer Dosierwalze zugeführt werden. Die Drehtrommel kann dabei doppelwandig ausgebildet sein, wobei der Ringraum von Brenngasen durchströmt ist und sich die Rohstoffkomponenten im Innenraum befinden. Zudem kann sie zentrisch von einer gestellfesten Heizeinrichtung, z. B. von einem mittels Infrarotstrahlern beheizten Rohr durchsetzt sein.

Der Gegenstand der Erfindung ist nachstehend anhand von in der Zeichnung dargestellten Ausführungsbeispielen näher erläutert. Es zeigen :

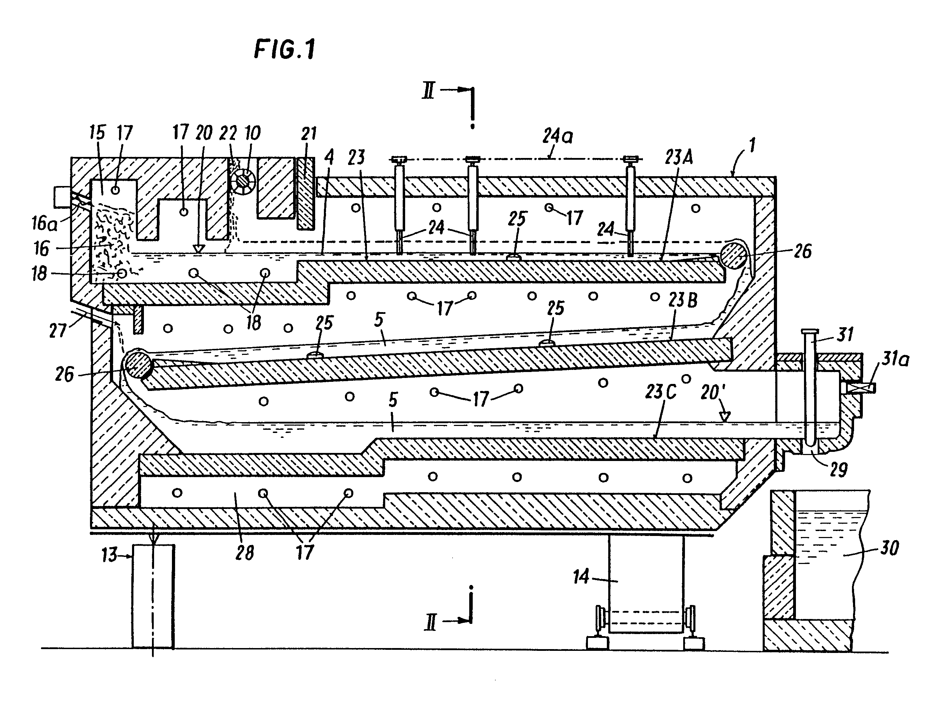

Fig. 1 eine anmeldungsgemäße Vorrichtung in Längsschnitt,

Fig. 2 die Vorrichtung gemäß Fig. 1 im Schnitt nach der Linie II-II der Fig. 1, in gegenüber der Fig. 1 vergrößertem Maßstab, die

Fig. 3 und 4 Details der Fig. 1, in gegenüber der Fig. 1 vergrößertem Maßstab,

Fig. 5 eine Draufsicht auf die Vorrichtung gemäß Fig. 1 in schematisierter Darstellung, in gegenüber der Fig. 1 verkleinertem Maßstab,

Fig. 6 eine Vorwärmeeinrichtung in Seitenansicht und

Fig. 7 die Vorwärmeeinrichtung in Richtung des Pfeiles A der Fig. 6 gesehen.

Eine erfindungsgemäße Vorrichtung besteht aus einem Schmelzofen 1, der mittels eines Drehlagers 13 und weiters mittels vorzugsweise zweier achsparalleler Wagen 14 um die das Drehlager 13 durchsetzende vertikale Achse um etwa 180° verschwenkbar ist.

Im Inneren des Schmelzofens 1 ist eine gegebenenfalls bis zu 3° gegen die Horizontale geneigte Bahn 23 vorgesehen, die durch aneinander anschließende und untereinander angeordnete Abschnitte 23A, 23B und 23C gebildet ist. Vor dem oberen Ende dieser Bahn 23 befindet sich eine Schmelzkammer 15, der durch einen mittels eines Schiebers absperrbaren Kanal 16a hindurch aus einem mit einer Dosiereinrichtung versehenen Vorratsbehälter Glasbruch 16 zuführbar ist. In den Bereichen des Bodens der Schmelzkammer 15 befinden sich Elektroden 18, welche die Seitenwände der Schmelzkammer 15 durchsetzen. Weiters befinden sich im oberen Bereich der von mindestens einer Brückenwand geteilten Kammer 15 Brenner 17. Zwischen der Schmelzkammer 15 und der Bahn 23 ist ein höhenverstellbarer Schieber 21 angeordnet, durch den die Schmelzkammer 15 gegenüber der Bahn 23 verschließbar ist.

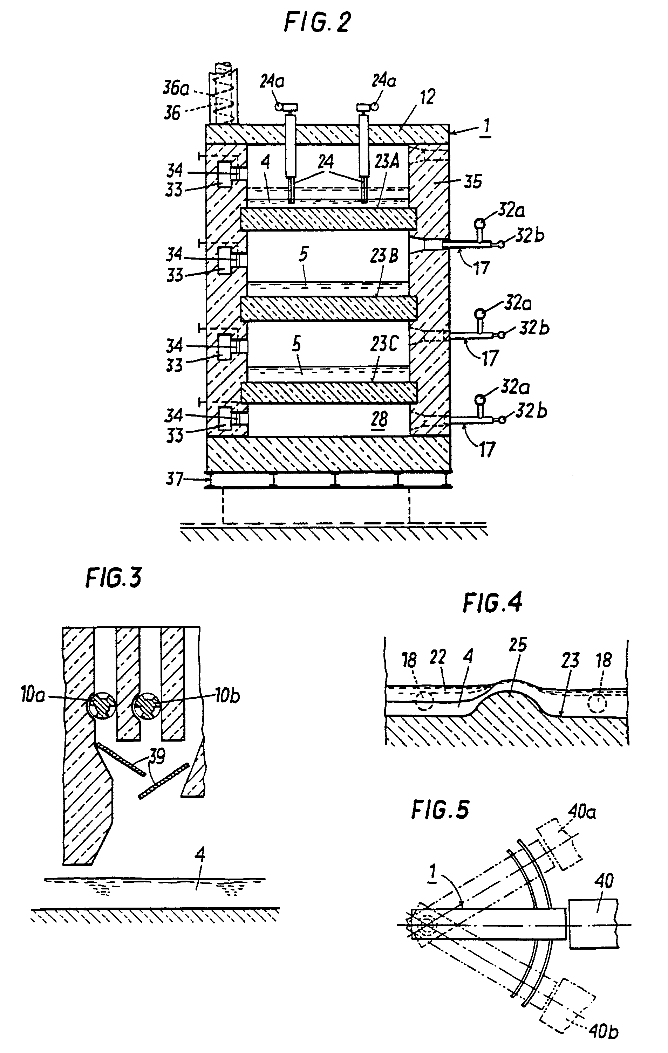

Im Bereich des oberen Endes der Bahn 23 befindet sich weiters mindestens ein Kanal mit einer Dosierwalze 10, über welche der Bahn 23 von Vorratsbehältern bzw. von Vorwärmeeinrichtungen die Rohstoffkomponenten 22 zuführbar sind. Weiters können in den Kanälen den Dosierwalzen 10 nachgeordnete Rüttel- und Mischeinrichtungen vorgesehen sein. Im Verlauf der Bahn 23 befinden sich an deren Boden Schwellen 25, deren Funktion anhand der Fig. 4 erläutert ist. Weiters können sich auch im Verlauf der Bahn 23 deren Seitenwände durchsetzende, weitere Elektroden befinden. Oberhalb der Bahn 23 sind Brenner 17 und bzw. oder elektrische Heizeinrichtungen vorgesehen. Die Deckenwand ist von vertikalen Rührvorrichtungen 24 durchsetzt, die mittels einer horizontaler. Welle 24a antreibbar sind. Weiters können auch die Seitenwände durchsetzende Rührvorrichtungen vorgesehen sein, die in den Abschnitten 23B und 23C zur Wirkung kommen. Die Bahn 23 ist durch Platten aus feuerfestem Material gebildet.

Beim Übergang von Abschnitt 23B zum Abschnitt 23C ist ein weiterer Speisekanal vorgesehen, in dem eine Speiseeinrichtung 27 für Läuterstoffe angeordnet ist. Weiters befinden sich jeweils an den Enden der Abschnitte 23A und 23B Förderwalzen 26, denen in der Bahn befindliche Schwellen vorgelagert sind. Diese Förderwalzen 26 müssen aus einem Material gefertigt sein, welches durch die aggresive Glasschmelze nicht angegriffen wird. So können diese Förderwalzen 26 aus keramischem Material gefertigt sein, damit die Glasschmelze an den Förderwalzen 26 möglichst wenig haftet. Weiters können den Förderwalzen 26 Heizeinrichtungen zugeordnet sein, durch welche diese so stark erhitzt werden, daß die Glasschmelze abfließt.

Im Endbereich der Kammer 15 und des Abschnittes 23C der Bahn 23 befinden sich Glasstandsregler 20 und 20', durch die die Dosierwalzen 10, die Funktion der Förderwalzen 26 und die Stellbewegung eines dem Auslauf 29 zugeordneten Stößels 31 steuerbar sind. Der Auslauf 29 mündet in ein Sammelbecken 30 oder in eine Rinne. Nahe dem Auslauf 29 ist eine Schauöffnung 31a vorgesehen. Schließlich ist unterhalb des Abschnittes 23C ein Brennraum 28 mit weiteren Brennern 17 vorgesehen, durch den der Abschnitt 23C von unten her beheizbar ist.

Die Funktion dieser Vorrichtung ist wie folgt: Durch den Speisekanal 16a werden aus dem der Kammer 15 zugeordneten Vorratsbehälter über eine Dosiereinrichtung in den Einlegeteil der Schmelzkammer 15 Glasscherben eingebracht. Diese werden hierauf durch die Brenner 17 auf eine Temperatur von etwa 900 °C erhitzt, wodurch sie geschmolzen werden. Hierauf werden durch die Seitenwände die Elektroden 18 eingeschoben, durch welche die Schmelzmasse auf diejenige Temperatur gebracht wird, bei der sie die erforderliche Fließfähigkeit bzw. Viskosität zur Bildung eines Glasschmelzflusses 4 aufweist. Die Rinne für den Glasschmelzfluß 4 wird von der Schmelzbahn 23 bzw. von deren Stirnfront begrenzt, wodurch eine ständige Überdeckung der vorzugsweise aus Molybdän gefertigten Elektroden 18 durch den Glasschmelzfluß gewährleistet ist und hierdurch der Zutritt von Luft zu verhindern ist.

Auf die Oberfläche dieses Glasschmelzflusses 4 werden mittels der mindestens einen Dosierwalze 10 die für die Herstellung der jeweiligen Glasart erforderlichen Rohstoffkomponenten 22 getrennt voneinander oder zumindest teilweise vorgemischt in den erforderlichen Anteilen aufgebracht. Die Menge der auf den Glasschmelzfluß 4 aufgebrachten Rohstoffkomponenten 22 wird durch das gewünschte Mengenverhältnis von Glasschmelzfluß 4 zu Rohstoffkomponenten 22 bestimmt. Dieses Verhältnis liegt im Bereich von einem Teil Glasschmelzfluß, der durch aufgeschmolzenen Glasbruch bzw. Glasfritte gebildet ist, und einem Teil bis neun Teilen Rohstoffkomponenten. Die pro Zeiteinheit erzeugte Schichtmenge aus dem Glasschmelzfluß und den Rohstoffkomponenten ist der von den Walzen 26 abgezogenen Menge an Schmelzgut direkt proportional.

Durch die dünnschichtige Aufbringung der Rohstoffkomponenten 22 auf den Glasschmelzfluß 4, der von der Kammer 15 her gespeist wird, erfolgt im Zusammenwirken mit der zusätzlich durch die Elektroden, die Brenner oder die Heizeinrichtungen 17 zugeführten Wärme, durch welche eine Temperatur von zumindest 1 200 °C bis etwa 1 500 °C erzeugt wird, ein vollständiges Aufschmelzen der Rohstoffkomponenten 22 bei gleichzeitiger teilweiser Vermischung mit dem Glasschmelzfluß 4. Durch die Rührvorrichtungen 24 und die Strömung des Glasschmelzflusses 4 über Schikanen bzw. die Schwellen 25 wird die Vermischung gefördert und wird die Bildung von Schichten mit Einschlüssen von nicht oder nicht hinreichend aufgeschmolzenen Rohstoffkomponenten, verhindert. Weiters wird hierdurch das Austreten von Dissozationsgasen beschleunigt. Durch die an den Enden der Abschnitte 23A und 23B vorgesehenen Walzen 26 ist die Fördergeschwindigkeit bzw. die Verweildauer des Glasschmelzflusses 4 im Abschnitt 23A bzw. des durch das Einschmelzen der Rohstoffkomponenten 22 gebildeten Schmelzflusses 5 im Abschnitt 23B gesteuert. Zur vollständigen Entfernung von Gaseinschlüssen werden am Ende des Abschnittes 23B Läuterstoffe eingeführt.

Der Zubringer 27 für die Läuterstoffe ist so angeordnet, daß diese der Glasschmelzmasse zugeführt werden, wenn sie sich schon in der flüssigen Phase befindet. Hierdurch wird ein vorzeitiges Verdampfen vermieden, Anhand eines Ausführungsbeispieles der Erzeugung von Kalk-Natron-Kieselsäureglas erläutert, erfolgt im Abschnitt 23A die bei etwa 800 °C bis 900 °C abgeschlossene Silikatbildung, im Abschnitt 23B die bei etwa 1 200 °C erreichte Phase der Glasbildung und im Abschnitt 23C die Läuterung und schließlich die Homogenisierung. Die Betriebstemperatur des Schmelzofens 1 beträgt etwa 1 500 °C. Da die thermisch-chemischen Reaktionen in der Anfangsphase einen großen Zeitaufwand bedingen, wird durch die Vorwärmung in bedeutendem Ausmaß Energie gespart.

Die Beheizung, die an sich ausschließlich mittels Elektroden erfolgen kann, kann im Hinblick darauf, daß kein Strom zur Verfügung steht oder die Stromkosten sehr hoch sind, durch über und unter der Schmelzbahn 23 angeordnete Gasbrenner 17 erfolgen. Durch diese erfolgt von oben her durch Strahlung und Konvektion und von unten her durch Wärmeleitung durch die Platten der Schmelzbahn 23 hindurch die Erwärmung des Glasschmelzflusses 4 bzw. des Schmelzflusses 5. Aufgrund der vorteilhaften Verhältnisse zwischen Raum und Schicht ist hierdurch ein äußerst energiesparender Schmelzablauf durchführbar, wodurch von der Vorwärmung bis zur Läuterung ein Energieaufwand erforderlich ist, der wesentlich geringer ist als bei bekannten Anlagen.

Über den Auslauf 29 gelangt das geläuterte, homogene Glas in das Sammelbecken 30 oder in eine Sammelrinne, wo es auf die zur maschinellen Verarbeitung notwendige Temperatur abkühlt, worauf es in der gewünschten Weise weiterverarbeitet wird.

In Fig. 2 ist die Wirkungsweise der Brenner 17 dargestellt. Über Luft- und Gasleitungen 32a und 32b wird den Brennern 17 ein Gas-Luft-Gemisch zugeführt. Die Brennerflammen streichen über das Schmelzgut. Die Abgase gelangen über regelbare Drosselklappen 34 in Abzugskanäle 33, aus welchen sie über ein Sammelrohr 36 an einem Wärmeaustauscher 36a vorbei geführt werden. Im Wärmetauscher 36a wird die Brennerluft vorgewärmt. Die Ofenwand 35 besteht aus vorzugsweise schmelzgegossenen, feuerfesten Steinen. Sie ist nach außen hin z. B. durch keramisches Fasermaterial isoliert. Aus dieser Darstellung sind weiters die Rührvorrichtungen 24, die die Deckwand 12 des Schmelzofens durchsetzen ersichtlich. Eine durch Rippen verstärkte doppelte Grundplatte 37 mit höhen- und seitenverstellbaren Zusatzeinrichtungen trägt die für das Aggregat erforderlichen Konstruktionen bzw. Haltekonstruktionen.

In Fig. 3 sind zwei Dosierwalzen 10a, 10b, dargestellt, durch die eine Zufuhr der Rohstoffkomponenten in zwei Gruppen erfolgen kann. Von einer Vorwärmeeinrichtung wird über einen Schwingverteiler einer ersten Dosierwalze 10 ein Gemenge eines ersten Teiles der Rohstoffkomponenten zugeführt. Einer in Richtung des Glasschmelzflusses dahinter angeordneten zweiten Dosierwalze 10 wird von der Vorwärmeeinrichtung über einen Schwingverteiler der zweite Teil der Rohstoffkomponenten zugeführt. Diese Anteile werden mittels einer Rütteleinrichtung 39 auf den Glasschmelzfluß 4 aufgebracht.

In Fig. 4 ist schematisch dargestellt, wie durch die Anordnung von Schwellen 25 unter Nutzung des Glasschmelzflusses 4 eine Beschleunigung der Schmelzung, Mischung und Homogenisierung bewirkt wird. Dies liegt darin begründet, daß der Glasschmelzfluß 4 infolge seiner Viskosität an der Schwelle 25 aufsteigt, wobei noch ungenügend geschmolzene Teile der Rohstoffkomponenten 22, die vor der Schwelle 25 aufgestaut werden, von dem Glasschmelzfluß 4 abgetragen, d. h. von diesem mitgerissen, und in ihm nachfolgend aufgeschmolzen werden. Auch hierdurch wird die Aufschmelzung und Homogenisierung entlang der Bahn 23 verbessert.

Da, wie aus Fig. 5 erkennbar ist, der erfindungsgemäße Schmelzofen 1 verschwenkbar ist, ist seine Verstellung auf eine andere ortsfeste Produktionseinrichtung 40a, 40b ohne Schwierigkeiten möglich. Dies deshalb, da alle seitlich angeordneten Antriebs- und Steuerelemente auf einer gemeinsamen Grundplatte gelagert oder abgestützt sind und sich auch die Rohstoffzufuhr bzw. Vorwärmeeinrichtungen auf einer darauf angeordneten Tragkonstruktion befinden sowie die jeweilige Komponentenübergabe auf einer ortsfesten Zubringung über der Schwenkachse des Ofens vorgesehen ist.

Wie dies dem Fachmann geläufig ist, muß das im Ofen 1 befindliche Schmelzgut ausgelassen werden, bevor der mit einem anderen Glassatz durchgeführte Schmelzbetrieb mit entsprechenden Steuerungen für eine andere Produktionseinrichtung aufgenommen werden kann. Da unterschiedliche Produktionseinrichtungen auch unterschiedliche Arbeitshöhen gegenüber dem Ofen bedingen können, ist die den Schmelzofen 1 tragende Grundplatte in bekannter Weise auch höhenverstellbar.

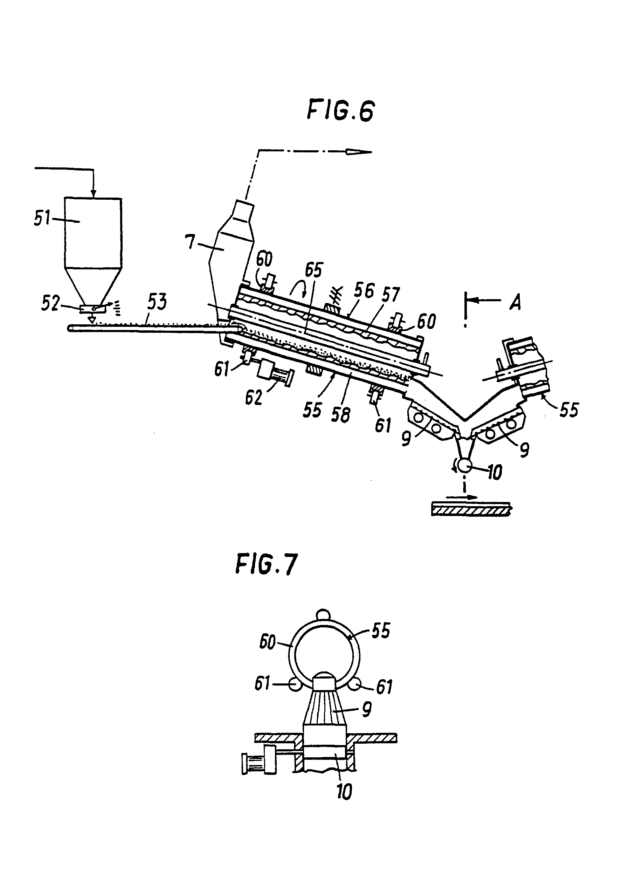

In den Fig. 6 und 7 ist eine Vorrichtung zum Vorwärmen der Rohstoffkomponenten dargestellt. Dieser Vorrichtung ist ein Vorratsbehälter 51 für die gemischten Rohstoffkomponenten zugeordnet, von dem das Rohstoffgemenge über eine Meßeinrichtung 52 mittels eines Förderbandes 53 einer Vorwärmtrommel 55 zuführbar ist. Die Trommel 55 ist um eine zur Horizontalen geneigte Achse verdrehbar.

Die Vorwärmtrommel 55 weist eine äußere Wandung 56 aus Stahlblech, dessen Innenseite z. B. durch keramisches Isolierfasermaterial hitzefest ist, und eine innere Wandung 57, die aus keramischem Material gefertigt ist, auf. Zwischen den beiden Wandungen 56 und 57 befindet sich ein Ringraum 58, der mit gegeneinander versetzten Schotten bzw. spiralig verlaufenden Leiteinrichtungen ausgebildet ist.

Die äußere Wandung 56 ist mit Laufkränzen 60 ausgebildet, die sich auf gestellfest gelagerte Walzen 61 abstützen. Eine der Walzen 61 ist mittels eines Motors 62 antreibbar. Im Inneren der Trommel 55 befindet sich ein starrbefestigtes Rohr 65. Dieses Rohr 65 kann aus zwei Halbschalen bestehen, wobei die obere Halbschale aus schlecht wärmeleitendem, feuerfesten Material und die untere Halbschale aus gut wärmeleitendem Material gefertigt ist. Im Inneren des Rohres 65 ist eine Infrarotheizung angeordnet.

An die obere Stirnfläche der Trommel 55 ist eine Gasabzugsvorrichtung 7 angeschlossen. Der unteren Strinfläche der Trommel 55 ist ein gegebenenfalls ebenfals beheizter Schwingverteiler 9 zugeordnet, der die mindestens eine Dosierwalze 10 speist.

Vom Vorratsbehälter 51 werden über die Meßeinrichtung 52 mittels des Förderbandes 53 der Drehtrommel 55 Roh-stoffkomponenten zugeführt. Die Trommel 55 wird mittels des Motors 62 verdreht. Durch den Ringraum 58 werden mittels Brenner erzeugte heiße Brenngase hindurchgeführt, die anschließend in den Abzug 7 gelangen. Das Rohr 65 wird ebenfalls erhitzt. Hierdurch werden die in die Trommel 55 eingespeisten Rohstoffkomponenten unter Umwälzung in der rotierenden Trommel 55 von oben und von unten her auf die gewünschte Temperatur unterhalb der Sintertemperatur einer eutektischen Schmelze erhitzt. Das derart erhitzte Gemenge wird über den Schwingrüttler 9 der mindestens einen Dosierwalze 10 zugeführt.

**Patentansprüche**

1. Verfahren zum Erzeugen von Glas zur Herstellung von Glasprodukten durch Einbringen von vorgewärmten Rohstoffkomponenten (22) und von Glasbruch (16) bzw. Fritte in einen Glasofen (1), Schmelzen der Ausgangsmaterialien unter Zufuhr von Wärmeenergie und unter Beifügung von Läuterstoffen sowie anschließende Durchführung der Rauhschmelze und der Feinschmelze, dadurch gekennzeichnet, daß die Rohstoffkomponenten (22) auf die Oberfläche eines längs einer gegebenenfalls geringfügig geneigten Bahn (23) geführten, aus dem Glasbruch oder der Fritte erzeugten Glasschmelzflusses (4) in einem Mengenverhältnis von einem Teil Glasschmelzfluß (4) und einem Teil bis neun Teilen Rohstoffkomponenten (22) aufgebracht und auf diesem bzw. in diesem unter Zufuhr der Wärmeenergie aufgeschmolzen werden, wobei die hierdurch gebildete Glasschmelze abgezogen wird und daß nach Einbringung der Läuterstoffe im letzten Abschnitt (23C) der Bahn (23) die Läuterung der Glasschmelze (5) erfolgt.

2. Verfahren nach Anspruch 1, dadurch gekennzeichnet, daß die Rohstoffkomponenten (22) bis auf einen Wert etwas unterhalb der Sintertemperatur einer eutektischen Schmelze aufgewärmt auf den Glasschmelzfluß (4) aufgebracht werden, wobei sie Temperaturen von vorzugsweise 350° bis etwa 450 °C aufweisen.

3. Verfahren nach einem der Ansprüche 1 und 2, dadurch gekennzeichnet, daß die auf den Glasschmelzfluß (4) aufgebrachten Rohstoffkomponenten (22) mit dem Glasschmelzfluß (4) mechanisch vermischt werden.

4. Verfahren nach einem der Ansprüche 1 bis 3, dadurch gekennzeichnet, daß der Glasschmelzfluß (4) mit den auf diesem aufzuschmelzenden bzw. auf diesem aufgeschmolzenen Rohstoffkomponenten (22) mit einer Geschwindigkeit von 5 cm bis 10 cm/min abgezogen wird.

5. Verfahren nach einem der Ansprüche 1 bis 4, dadurch gekennzeichnet, daß die einzelnen Rohstoffkomponenten (22) miteinander zumindest teilweise vorgemischt auf den Glasschmelzfluß (4) aufgebracht werden oder entsprechend ihren chemophysikalischen Reaktionen gesondert voneinander zeitlich und örtlich auf den Glasschmelzfluß (4) aufgebracht werden.

6. Verfahren nach einem der Ansprüche 1 bis 5, dadurch gekennzeichnet, daß die Zufuhr von Wärme in den Glasschmelzfluß (4) mittels in diesen einragender Elektroden erzeugter Ohmscher Wärme erfolgt.

7. Verfahren nach einem der Ansprüche 1 bis 6, dadurch gekennzeichnet, daß die Zufuhr von Wärme zum Glasschmelzfluß (4) bzw. zum Schmelzfluß (5) mittels die Oberfläche des Glasschmelzflusses (4) bzw. des Schmelzflusses (5) beheizender Brenner (17) oder elektrischer Heizeinrichtungen erfolgt.

8. Verfahren nach einem der Ansprüche 1 bis 7, dadurch gekennzeichnet, daß der Glasschmelzfluß (4) bzw. der Schmelzfluß (5) von unten her durch Wärmeleitung der die Bahn (23) bildenden Platten, indem an deren Unterseiten Wärme zugeführt wird, erhitzt werden.

9. Vorrichtung zur Durchführung des Verfahrens nach einem der Ansprüche 1 bis 8 mit einem Schmelzofen (1), Einrichtungen (17) für die Zufuhr von Wärme, einer Einrichtung (55) zur Vorwärmung der Rohstoffkomponenten (22) und einer Einrichtung zum Einbringen von Glasbruch (16) bzw. Glasfritte, von Rohstoffkomponenten (22) und von Läuterstoffen in den Schmelzofen, dadurch gekennzeichnet, daß der Schmelzofen eine allenfalls gegenüber der Horizontalen geringfügig geneigte Bahn (23) enthält, vor deren oberem Ende eine Einrichtung (15) zur Erzeugung eines Glasschmelzflusses (4) aus dem Glasbruch bzw. aus der Fritte angeordnet ist, daß die Einrichtungen (10) zum Einbringen von der Glaserzeugung dienenden Rohstoffkomponenten so angebracht sind, daß sie diese Rohstoffkomponenten (22) auf den Glasfluß (4) aufbringen, daß gegebenenfalls Mischeinrichtungen (24) vorgesehen sind, und daß weiters Abzugseinrichtungen, insbesondere feuerfeste Walzen (26), vorgesehen sind, wobei die Einrichtung (27) zum Einbringen der Läuterstoffe vor dem letzten Abschnitt (23C) der Bahn (23), wo die Läuterung erfolgt, angeordnet ist.

10. Vorrichtung nach Anspruch 9, dadurch gekennzeichnet, daß am oberen Ende der Bahn (23) wenigstens eine vorzugsweise unterteilte Kammer (15) zum Aufschmelzen des Glasbruches (16) oder der Fritte angeordnet ist.

11. Vorrichtung nach einem der Ansprüche 9 und 10, dadurch gekennzeichnet, daß die Einrichtungen für das Aufbringen der Rohstoffkomponenten (22) auf den Glasschmelzfluß (4) durch Dosiereinrichtungen (10) und diesen nachgeschaltete Rütteleinrichtungen (39) zum Vermischen der Rohstoffkomponenten (22) gebildet sind.

12. Vorrichtung nach einem der Ansprüche 9 bis 11, dadurch gekennzeichnet, daß die Einrichtungen zur Zufuhr von Wärme durch längs der Bahn (23) angeordnete Elektroden und bzw. oder durch Brenner (17) bzw. elektrische Heizeinrichtungen gebildet sind.

13. Vorrichtung nach einem der Ansprüche 9 bis 12, dadurch gekennzeichnet, daß im Verlauf der Bahn (23) Schikanen, insbesondere Schwellen (25), insbesondere zur Erleichterung des Austretens von Dissoziationsgasen, vorgesehen sind.

14. Vorrichtung nach einem der Ansprüche 9 bis 13, dadurch gekennzeichnet, daß die Decke (12) des Schmelzofens durchsetzende, vorzugsweise höhenverstellbare, feuerfeste Rührer (24) vorgesehen sind, durch welche die auf den Glasschmelzfluß (4) aufgebrachten Rohstoffkomponenten (22) mit diesen vermischbar sind.

15. Vorrichtung nach einem der Ansprüche 9 bis 14, dadurch gekennzeichnet, daß die Seitenwände (35) des Schmelzofens (1) durchsetzende Rührvorrichtungen vorgesehen sind, durch welche im Schmelzfluß (5) Strömungen bewirkt werden, Schichtenbildungen vermieden werden und die Entgasung unterstützt wird.

16. Vorrichtung nach einem der Ansprüche 9 bis 15, dadurch gekennzeichnet, daß sie als Einheit höhenverstellbar und bzw. oder um eine vertikale Achse verschwenkbar gelagert ist.

17. Vorrichtung nach einem der Ansprüche 9 bis 16, dadurch gekennzeichnet, daß die Vorwärmeinrichtung durch eine um eine geneigte Achse verdrehbare und beheizbare Trommel (55) gebildet ist, an deren oberem Stirnende die Rohstoffkomponente (22) zuführbar sind und von deren unterem Stirnende sie abgebbar sind.

18. Vorrichtung nach Anspruch 17, dadurch gekennzeichnet, daß die Drehtrommel (55) doppelwandig ausgebildet ist, wobei die Rohstoffkomponenten (22) im Innenraum geführt sind und der Ringraum (58) durch Brenngase beheizbar ist.

19. Vorrichtung nach einem der Ansprüche 17 und 18, dadurch gekennzeichnet, daß im Innenraum der Drehtrommel (55) eine gestellfeste Heizeinrichtung (65) angeordnet ist.

20. Vorrichtung nach einem der Ansprüche 17 bis 19, dadurch gekennzeichnet, daß der Förderraum für die Rohstoffkomponenten (22) mit spiralig verlaufenden Leiteinrichtungen ausgebildet ist.

## Claims

1. A method of producing glass for the manufacture of glass products by introducing preheated raw material components (22) and cullet (16) or frit into a glass furnace (1), melting the starting material by introducing thermal energy and adding refining agents and by subsequent carrying out of coarse and fine fusion, characterized in that the raw material components (22) are applied to the surface of a glass melt flow (4), formed of the cullet or frit and guided along an optionally slightly inclined path (23), in a ratio of one part glass melt flow (4) and one to nine parts of raw material components (22) and are melted thereon or therein by introducing the thermal energy, the glass melt formed thereby being drawn off and in that after introduction of the refining agents in the last section (23C) of the path (23) refining of the glass melt (5) occurs.

2. A method according to claim 1, characterized in that the raw material components (22) are applied to the glass melt flow (4) heated to a temperature somewhat below the fusion temperature of a eutectic melt, said raw material components (22) having temperatures of preferably from 350° to approximately 450 °C.

3. A method according to claim 1 or claim 2, characterized in that the raw material components (22) applied to the glass melt flow (4) are mixed mechanically with the glass melt flow (4).

4. A method according to any one of claims 1 to 3, characterized in that the glass melt flow (4) is withdrawn with the raw material components (22) to be fused or already fused thereon at a speed of from 5 cm to 10 cm/min.

5. A method according to any one of claims 1 to 4, characterized in that the individual raw material components (22) are applied to the glass melt flow (4) in an at least partially premixed state or are applied to the glass melt flow (4) separated from each other by time and location according to their chemico-physical reactions.

6. A method according to any one of claims 1 to 5, characterized in that the supply of heat to the glass melt flow (4) is effected by means of ohm heat generated by electrodes projecting therein.

7. A method according to any one of claims 1 to 6, characterized in that the supply of heat to the glass melt flow (4) or to the melt flow (5) is effected by means of burners (17) or electrical heating apparatuses heating the surface of the glass melt flow (4) or the melt flow (5).

8. A method according to any one of claims 1 to 7, characterized in that the glass melt flow (4) and the melt flow (5) are heated from below by thermal conduction from the plates forming the path (23), heat being supplied to the undersides thereof.

9. An apparatus for implementing the method according to any one of claims 1 to 8, comprising a melting furnace (1), devices (17) for the supply of heat, a device (55) for preheating the raw material components (22) and a device for introducing cullet (16) or glass frit, raw material components (22) and refining agents into the melting furnace, characterized in that the melting furnace contains a path (23) slightly inclined, if need be, with respect to the horizontal, before the upper end of which path (23) there is arranged a device (15) for generating a glass melt flow (4) comprising the cullet or the frit, in that the devices (10) for introducing raw material components serving to form glass are so arranged that they supply these raw material components (22) to the glass flow (4), in that mixing devices (24) are optionally provided, and in that, furthermore, withdrawing devices, especially fireproof rollers (26), are provided, the device (27) for introducing the refining agents being arranged before the last section (23C) of the path (23), at which section refining occurs.

10. An apparatus according to claim 9, characterized in that at the upper end of the path (23) there is arranged at least one preferably subdivised chamber (15) for melting the cullet (16) or the frit.

11. An apparatus according to claim 9 or claim 10, characterized in that the devices for applying the raw material components (22) to the glass melt flow (4) are formed of metering devices (10) and vibrating devices (39) arranged downstream thereof for mixing the raw material components (22).

12. An apparatus according to any one of claims 9 to 11, characterized in that the devices for supplying heat consist of electrodes arranged along the path (23) and/or of burners (17) or electrical heating devices.

13. An apparatus according to any one of claims 9 to 12, characterized in that along the path (23) there are provided chicanes, especially bumps (25), in particular to ease the exit of dissociation gases.

14. An apparatus according to any one of claims 9 to 13, characterized in that there are provided preferably height-adjustable, fireproof agitators (24) passing through the cover (12) of the melting furnace, by means of which agitators the raw material components (22) applied to the glass melt flow (4) can be mixed therewith.

15. An apparatus according to any one of claims 9 to 14, characterized in that agitators are provided which pass through the side walls (35) of the melting furnace (1) and by means of which flows are produced in the melt flow (5), layer formation is prevented and degassing is promoted.

16. An apparatus according to any one of claims 9 to 15, characterized in that it is mounted as a unit to be height adjustable and/or swivellable about a vertical axis.

17. An apparatus according to any one of claims 9 to 16, characterized in that the preheating device consists of a heatable drum (55) rotatable about an inclined axis, to the upper end of which drum the raw material components (22) may be supplied and from the lower end of which they may be removed.

18. An apparatus according to claim 17, characterized in that the rotary drum (55) is of double-walled construction, the raw material components (22) being introduced into the inner chamber and the annular space (58) being heatable by combustible gases.

19. An apparatus according to claim 17 or claim 18, characterized in that a fixed heating device (65) is arranged in the inner chamber of the rotary drum (55).

20. An apparatus according to any one of claims 17 to 19, characterized in that the conveying space for the raw material components (22) is constructed with helically running conveying devices.

## Revendications

1. Procédé de production de verre pour la fabrication de produits en verre, par introduction de composants de matières premières (22) préchauffés et de débris de verre (16) ou de fritte dans un four à verre (1), par fusion des matières premières par apport d'énergie thermique et ajout de produits d'affinage et réalisation consécutive de la fusion brute et de la fusion fine, caractérisé en ce que les composants de matières premières (22) sont appliqués à la surface d'un flux de verre fondu (4) produit à partir des débris de verre ou de la fritte, guidé le long d'une voie (23) éventuellement légèrement inclinée, dans un rapport en quantité d'une partie de flux de verre fondu (4) et d'une à neuf parties de composants de matières premières (22), et en ce qu'ils sont fondus sur celui-ci ou dans celui-ci, par apport d'énergie thermique, le verre fondu ainsi formé étant extrait, et en ce qu'après introduction des produits d'affinage, l'affinage du verre fondu (5) s'effectue dans la dernière portion (23C) de la voie (23).

2. Procédé selon la revendication 1, caractérisé en ce que les composants de matières premières (22), chauffés jusqu'à une valeur légèrement inférieure à la température de frittage d'une masse fondue eutectique, sont appliqués sur le flux de verre fondu (4), leurs températures étant de préférence comprises entre 350 et 450 °C environ.

3. Procédé selon l'une des revendications 1 et 2, caractérisé en ce que les composants de matières premières (22) appliqués sur le flux de verre fondu (4) sont mélangés mécaniquement au flux de verre fondu (4).

4. Procédé selon l'une des revendications 1 à 3, caractérisé en ce que le flux de verre fondu (4) est extrait avec les composants de matières premières (22) à fondre sur celui-ci ou fondus sur celui-ci, à une vitesse comprise entre 5 cm et 10 cm/mn.

5. Procédé selon l'une des revendications 1 à 4, caractérisé en ce que les différents composants de matières premières (22) sont préalablement mélangés entre eux, au moins provisoirement, et appliqués sur le flux de verre fondu (4), ou appliqués séparément dans le temps et dans l'espace, sur le flux de verre fondu (4), en fonction de leurs réactions chimicophysiques.

6. Procédé selon l'une des revendications 1 à 5, caractérisé en ce que l'apport de chaleur dans le flux de verre fondu (4) s'effectue par chaleur ohmique produite dans celui-ci au moyen d'électrodes pénétrant dans ce flux.

7. Procédé selon l'une des revendications 1 à 6, caractérisé en ce que l'apport de chaleur au flux de verre fondu (4) ou au flux fondu (5), s'effectue au moyen de brûleurs (17) ou de dispositifs de chauffage électrique, chauffant la surface du flux de verre fondu (4) ou du flux fondu (5).

8. Procédé selon l'une des revendications 1 à 7, caractérisé en ce que le flux de verre fondu (4) ou le flux fondu (5) est chauffé à partir du bas, par conduction de chaleur des plaques formant la voie (33), de la chaleur étant amenée à leurs faces inférieures.

9. Dispositif de mise en œuvre du procédé selon l'une des revendications 1 à 8, comportant un four de fusion (1), des dispositifs (17) d'apport de chaleur, un dispositif (55) pour le préchauffage des composants de matières premières (22), un dispositif d'introduction de débris de verre (16) ou de fritte de verre, de composants de matières premières (22) et de produits d'affinage dans le four de fusion, caractérisé en ce que le four de fusion comporte une voie (23) légèrement inclinée dans tous les cas par rapport à l'horizontale, un dispositif (15) de production d'un flux de verre fondu (4) constitué de débris de verre ou de fritte, étant placé en amont de son extrémité supérieure, en ce que les dispositifs (10) d'introduction des composants de matières premières servant à la production de verre, sont placés de telle sorte qu'ils appliquent ces composants de matières premières (22) sur le flux de verre (4), en ce qu'éventuellement des dispositifs de malaxage (24) sont prévus et en ce qu'en outre, des dispositifs d'extraction, en particulier des cylindres (26) réfractaires sont prévus, le dispositif (27) d'introduction des produits d'affinage étant placé en amont de la dernière portion (23C) de la voie (23), où s'effectue l'affinage.

10. Dispositif selon la revendication 9, caractérisé en ce qu'au moins une chambre (15), de préférence subdivisée, est placée à l'extrémité supérieure de la voie (23), pour la fusion des débris de verre (16) ou de la fritte.

11. Dispositif selon l'une des revendications 9 et 10, caractérisé en ce que les dispositifs d'application des composants de matières premières (22) sur le flux de verre fondu (4), sont formés par des dispositifs de dosage (10) et par des dispositifs à vibrations (39), montés en aval, pour le mélange des composants de matières premières (22).

12. Dispositif selon l'une des revendications 9 à 11, caractérisé en ce que les dispositifs d'apport de chaleur sont formés par des électrodes placées le long de la voie (23) et, éventuellement ou, par des brûleurs (17) ou des dispositifs de chauffage électrique.

13. Dispositif selon l'une des revendications 9 à 12, caractérisé en ce que des chicanes, en particulier des seuils (25), sont prévues sur le parcours de la voie (23), en particulier pour faciliter l'échappement des gaz de dissociation.

14. Dispositif selon l'une des revendications 9 à 13, caractérisé en ce qu'il est prévu des agitateurs (24) réfractaires, traversant la voûte (12) du four de fusion, de préférence réglables en hauteur, permettant de mélanger les composants de matières premières (22) appliqués sur le flux de verre fondu (4).

15. Dispositif selon l'une des revendications 9 à 14, caractérisé en ce qu'il est prévu des dispositifs d'agitation traversant les parois latérales (35) du four de fusion (1) qui permettent de provoquer des courants dans le flux fondu (5), d'éviter la formation de couches et de faciliter le dégazage.

16. Dispositif selon l'une des revendications 9 à 15, caractérisé en ce qu'il est monté comme une unité réglable en hauteur et, éventuellement ou, pivotant autour d'un axe vertical.

17. Dispositif selon l'une des revendications 9 à 16, caractérisé en ce que le dispositif de préchauffage est formé par un tambour (55) tournant autour d'un axe incliné, et chauffable, les composants de matières premières (22) pouvant être amenés à son extrémité frontale supérieure, et extraits de celui-ci à son extrémité frontale inférieure.

18. Dispositif selon la revendication 17, caractérisé en ce que le tambour tournant (55) est à double paroi, les composants de matières premières (22) étant guidés à l'intérieur et l'espace annulaire (58) pouvant être chauffé par les gaz de combustion.

19. Dispositif selon l'une des revendications 17 et 18, caractérisé en ce qu'un dispositif de chauffage (65) solidaire du bâti est placé à l'intérieur du tambour tournant (55).

20. Dispositif selon l'une des revendications 17 à 19, caractérisé en ce que l'espace de transport des composants de matières premières (22) comporte des dispositifs de guidage en spirale.

FIG.1

## FIG. 2

## FIG.3

## FIG.4

## FIG.5

# FIG.6

# FIG.7